# EUROPEAN PATENT APPLICATION

(11) **EP 3 672 064 A1**
(43) Date of publication of application: **24.06.2020**
(21) Application number: 18213489.0
(22) Date of filing: 18.12.2018
(51) Int. Cl.: H02P 25/00, B25B 31/00, H02P 25/022, H02P 25/03

(54) **MOTOR CONTROL METHOD**

(71) Applicant: Hilti Aktiengesellschaft, 9494 Schaan (LI)
(72) Inventor: Herrero Fernandez, Joaquin, 86150 Augsburg (DE)
(74) Representative: Hilti Aktiengesellschaft Corporate Intellectual Property

(57) **Abstract**

A method of controlling a BLDC electric motor having a stator and a rotor, the stator having a plurality of magnet coils, the rotor having a permanent magnet driven by the plurality of magnet coils, comprising
a) supplying a voltage to a first of the plurality of magnet coils,
b) short-circuiting a second of the plurality of magnet coils during step a).

## Description

### Background of the Invention

The invention relates to a method of controlling a motor, such as a brush-less direct current (BLDC) electric motor. More particularly, the invention relates to a method of controlling a BLDC electric motor having a stator and a rotor, the stator having a plurality of magnet coils, and the rotor having a permanent magnet driven by the plurality of magnet coils. One constraint with the use of a BLDC electric motor, as with any electric motor, is the motor's efficiency in transferring electric energy into rotational energy. Another constraint with the use of a BLDC electric motor, as with any electric motor, is the performance of the motor with regard to a rotational speed, torque and so on, at a given voltage and/or electric current supplied to the motor.

### Brief Summary of the Invention

The above constraints are addressed by a method of controlling a BLDC electric motor having a stator and a rotor, the stator having a plurality of magnet coils, the rotor having a permanent magnet driven by the plurality of magnet coils, comprising a) supplying a voltage to a first of the plurality of magnet coils, and b) short-circuiting a second of the plurality of magnet coils during step a). Supplying the voltage to the first magnet coil creates an electric current flowing through the first magnet coil which in turn creates a magnetic field in an area inside and outside the first magnetic coil. Such a magnetic field accelerates the permanent magnet and hence drives rotation of the BLDC motor. Short-circuiting the second magnet coil during step a) prevents the magnetic field from inducing in the second magnet coil a secondary electric current possibly detrimental to the above acceleration of the permanent magnet.

In a preferred embodiment, the method further comprises short-circuiting the first of the plurality of magnet coils following step a) or, in particular immediately following step a).

The above constraints are further addressed by a method of controlling a BLDC electric motor having a stator and a rotor, the stator having a plurality of magnet coils, the rotor having a permanent magnet driven by the plurality of magnet coils, wherein the electric motor comprises a motor control circuit having a high connection line, a low connection line, a plurality of high switches, a plurality of low switches, a plurality of intermediate contacts connected to the high connection line via one of the plurality of high switches and connected to the low connection line via one of the plurality of low switches, wherein each one of the plurality of magnet coils has a first end electrically connected to a first one of the plurality of intermediate contacts and a second end electrically connected to a second one of the plurality of intermediate contacts, the each one of the plurality of magnet coils thereby electrically interconnecting the first one of the plurality of intermediate contacts and the second one of the plurality of intermediate contacts, comprising
providing a voltage between the high connection line and the low connection line
closing a first one of the plurality of high switches, thereby electrically connecting the first one of the plurality of intermediate contacts to the high connection line during a first commutation phase,
closing a second one of the plurality of low switches, thereby electrically connecting the second one of the plurality of intermediate contacts to the low connection line during the first commutation phase,
closing a third one of the plurality of low switches, thereby electrically connecting a third one of the plurality of intermediate contacts to the low connection line during the first commutation phase.

In a preferred embodiment, the method further comprises
opening the second one of the plurality of low switches, thereby electrically disconnecting the second one of the plurality of intermediate contacts from the low connection line during a second commutation phase following the first commutation phase, and
closing a second one of the plurality of high switches, thereby electrically connecting the second one of the plurality of intermediate contacts to the high connection line during the second commutation phase.

In a preferred embodiment, the second commutation phase is immediately following the first commutation phase, with no other commutation phases thereinbetween. In another preferred embodiment, a dead-time interval is elapsing after the second one of the plurality of low switches is opened and before the second one of the plurality of high switches is closed.

In another preferred embodiment, the plurality of magnet coils consists of three magnet coils. In another preferred embodiment, the plurality of high switches consists of three high switches. In another preferred embodiment, the plurality of low switches consists of three low switches. In another preferred embodiment, the plurality of intermediate contacts consists of three intermediate contacts. In another preferred embodiment, each of the plurality of high switches and/or each of the plurality of low switches comprises a field-effect transistor.

In another preferred embodiment, the method is integrated in a method of operating a driving tool having a driving piston and an actuating device for actuating the driving piston such that the driving piston drives a fastening element into a substrate, wherein the actuating device comprises a BLDC motor controlled as in any of the embodiments above.

### Brief Description of the Several Views of the Drawing

Further aspects and advantages of the fastening tool, associated parts and a method of use thereofwill become apparent from the ensuing description that is given by way of example only and with reference to the accompanying drawings in which:
- Fig. 1: illustrates a side view of a driving device,
- Fig. 2: illustrates a side view of the driving device with opened housing,
- Fig. 3: illustrates a perspective view of a tensioning device,
- Fig. 4: illustrates a perspective view of the tensioning device in a tensioned state,
- Fig. 5: illustrates a cross-sectional view of an electric motor,
- Fig. 6: illustrates a schematic view of the electric motor,
- Fig. 7: illustrates several arrangements of permanent magnets within an electric motor,
- Fig. 8: illustrates a wiring diagram of an electric motor, and
- Fig. 9: illustrates a commutation table of a method of controlling an electric motor.

### Detailed Description of the Invention

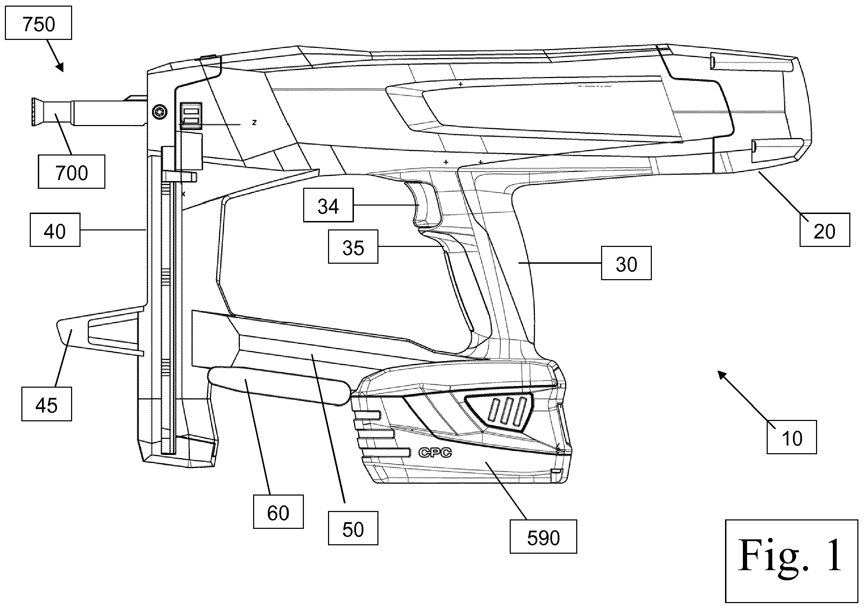

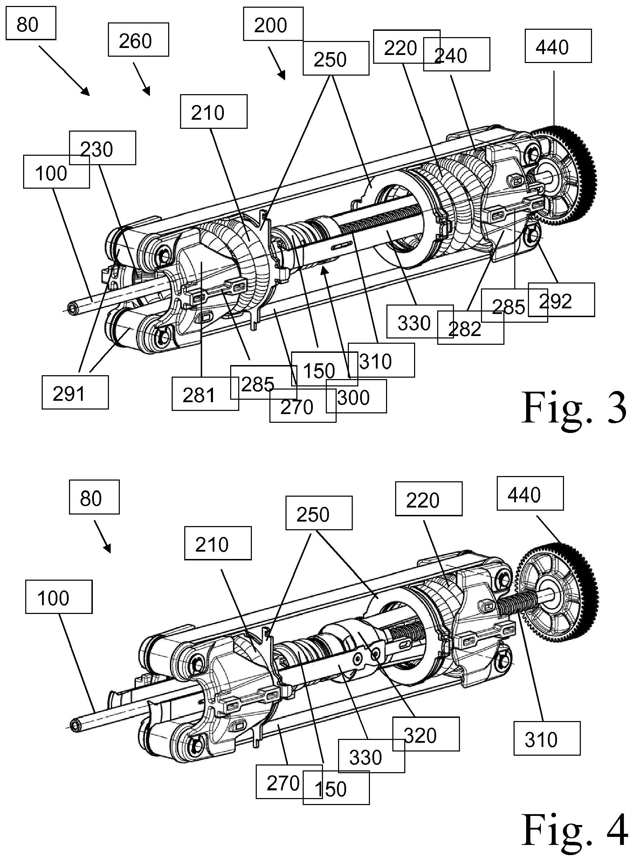

Figs. 1 shows a driving tool 10 for driving a fastening element, e.g. a nail or bolt, into a substrate in a side view. The driving tool 10 has a driving piston (shown in Figs. 3 and 4) for driving a fastening element into a substrate, and a housing 20 accommodating the driving piston and an actuating device for actuating the driving piston. The driving tool 10 has a grip 30, a magazine 40 and a bridge 50 connecting the grip 30 to the magazine 40. A scaffold hook 60 for hanging the driving tool 10 on a scaffold or the like and an electrical battery 590 are fastened to the bridge 50. A trigger 34 and a hand switch 35 are arranged on the grip 30. The driving tool 10 further has a guide channel 700 for guiding the fastening element and a press-on probe 750 for detecting a pressing the driving tool 10 on the substrate. An alignment of the driving tool 10 perpendicular to a surface of the substrate is supported by a support element 45.

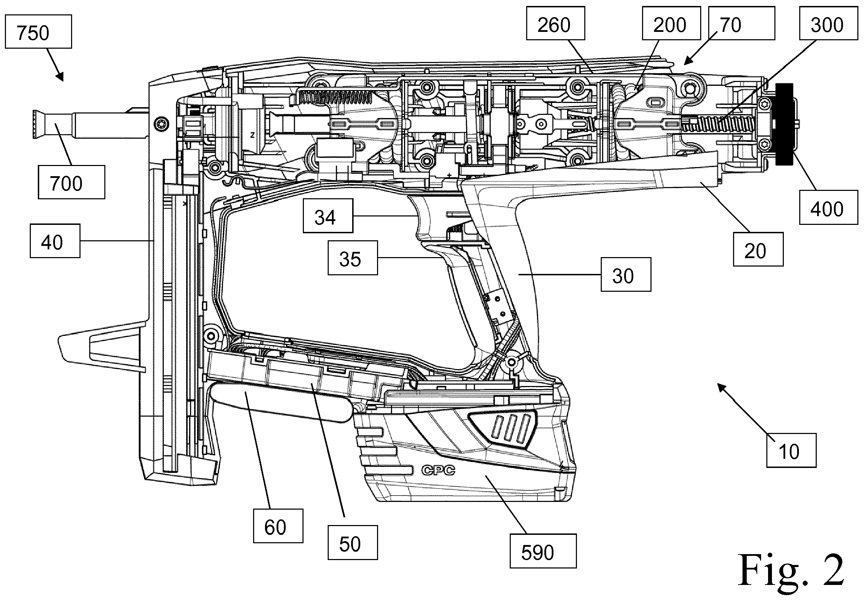

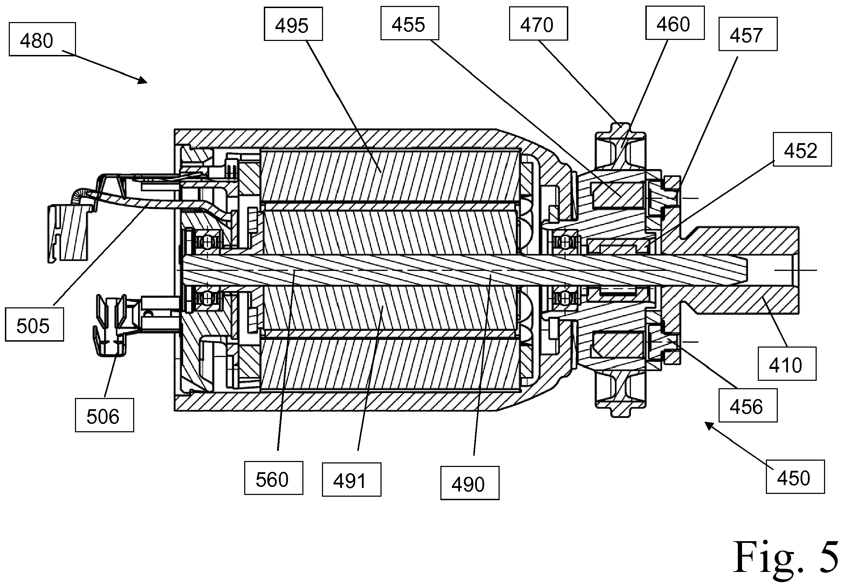

Fig. 2 shows the driving tool 10 with opened housing 20. An actuating device 70 for actuating the driving piston is accommodated in the housing 20. The actuating device 70 comprises an electric motor (shown in Fig. 5) for converting electrical energy from the electrical battery 590 into rotational energy, a transmission 400 for transferring a torque of the electric motor to a spindle drive 300, a roll train 260 for transmitting a force from the spindle drive 300 to a spring 200 and for transmitting a force from the spring 200 to the driving piston.

Figs. 3 and 4 show the roll train 260 in more detail in an expanded state (Fig. 3) and a tensioned state (Fig. 4), respectively. The roll train 260 comprises a belt 270, a front roll holder 281 having front rolls 291, and a rear roll holder 282 having rear rolls 292. The roll holders 281, 282 are made from an e.g. fiber-reinforced plastic. For guiding the roll holders 281, 282 e.g. in not-shown grooves of the housing (shown in Figs. 1 and 2), the roll holders 281, 282 comprise guide rails 285. The spindle drive 300 comprises a spindle 310, a spindle nut 320 (not visible in Fig. 3) and a spindle gear 440. The belt 270 engages with the spindle nut 302 and the driving piston 100, and runs around the rolls 291, 292, thereby forming the roll train 260. The driving piston 100 is held in a coupler 150.

The spring 200 comprises a front spring element 210 having a front spring end 230 and a rear spring element 220 having a rear spring end 240. The front spring end 230 is held in the front roll holder 281, whereas the rear spring end 240 is held in the rear roll holder 282. The roll train 260 provides for a step-up transmission of a relative speed of the spring ends 230, 240 with respect to one another into a speed of the driving piston 100 by a factor of two. The spring elements 210, 220 are supported at their facing sides against the housing by support rings 250. By the symmetric arrangement of the spring elements 210, 220, any recoil forces caused by the spring elements 210, 220 are canceled out, thus improving an operating comfort of the driving tool 10.

As mentioned above, Fig. 3 shows the roll train 260 in an expanded state, in which the spring elements 210, 220 are relaxed. Fig. 4 shows the roll train 260 in a tensioned state, in which the spring elements 210, 220 are compressed. The spindle nut 320 is now located at a front end of the spindle 310 and pulls the belt 270 into the rear spring element 220. Therefore, the roll holders 281, 282 are moved toward each other, and the spring elements 210, 220 are tensioned. The driving piston 100 is held by the coupler 150 against a spring force of the spring elements 210, 220. In order to actuate the piston 100 to drive a fastening element into a substrate, a user pulls the trigger 34 (Figs. 1, 2), causing the coupler 150 to release the driving piston 100.

Fig. 5 shows the electric motor 480 of the actuating device 70 (Fig. 2) having a motor output 490 in a cross-sectional view. The electric motor 480 is formed as a brush-less direct-current (BLDC) motor and has magnet coils 495 for driving the motor output 490 that comprises a permanent magnet 491. The motor output 490 rotates about a rotational axis 560. The electric motor 480 is held by a not-shown motor receptacle and supplied with electrical energy from the electrical battery 590 by means of crimp contacts 506. The driving tool 10 comprises a control unit which controls the electric motor 480 by means of a control line 505 in a manner as described below.

On the motor output 490, a motor pinion 410 is fastened locked in rotation by a press fit. The motor pinion 410 is driven by the motor output 490 and drives the spindle drive 300 by means of the transmission 400 (Fig. 2) and the spindle gear 440 (Figs. 3, 4). A retaining mechanism 450 is supported, on one hand, by means of a bearing 452 on the motor output 490 such that it may rotate and, on the other hand, locked in rotation by means of a ring-shaped assembly element 470 on the motor receptacle. A ring-shaped motor damping element 460 for damping relative movements between the electric motor 480 and the motor receptacle. The retaining mechanism 450 comprises a magnetic coil 455 that may exert a force of attraction on a magnetic armature 456 when energized. The magnetic armature 456 extends into an opening 457 formed in the motor pinion 410. Due to the force of attraction, the magnetic armature 456 is pressed against the retaining mechanism 450 such that a rotation of the motor output 490 is braked or prevented when the magnetic coil 455 is energized.

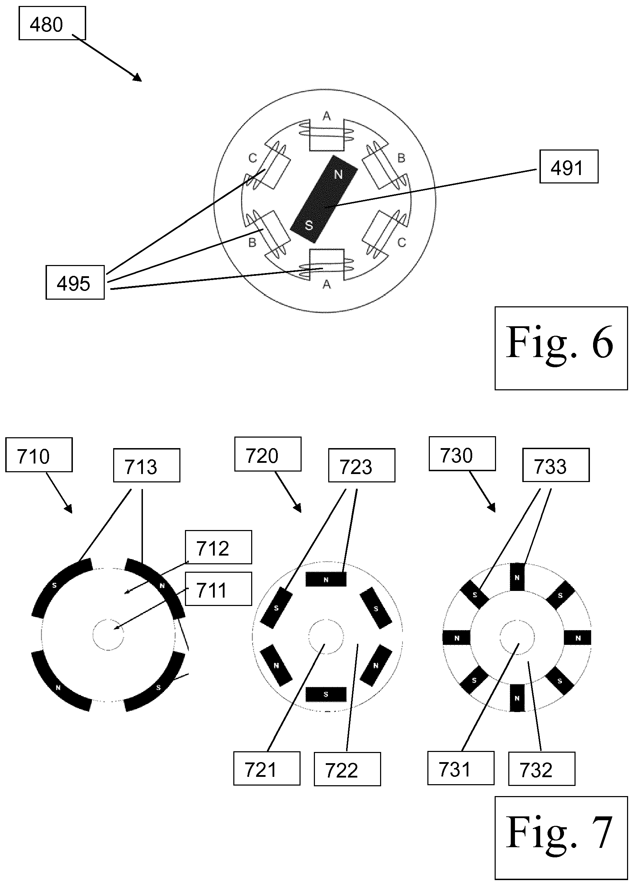

Fig. 6 shows the electric motor 480 in a schematic view. The magnet coils 495 comprise three pairs A, B, C of magnet coils arranged equidistantly along a circumference of the electric motor 480, each pair A, B, C comprising two magnet coils arranged at opposite positions relative to each other with respect to the axis of rotation (which is oriented perpendicular to a plane of projection in Fig. 6). In not-shown embodiments, the magnet coils comprise one, two, four or more pairs of magnet coils arranged equidistantly along a circumference of the electric motor. The permanent magnet 491 is positioned on the axis of rotation and has a north pole N and a south pole S which are likewise arranged on opposite sides of the axis of rotation.

The principle of operation is based on electrical energy conversion into mechanical energy by the magnetic attractive forces between the permanent magnet 491 and a rotating magnetic field induced in the magnet coils 495. In order to rotate the magnetic field, the magnet coils 495 or pairs of magnet coils are supplied with electric current one after another (commutation). However, the rotating permanent magnet 491 induces a secondary magnetic field in the magnet coils 495 generating a back-electromotive force (BEMF) which reduces an efficiency of the electric motor 480. It is an object of the invention to increase the motor's efficiency which may be solved by reducing the back-electromotive forces.

Fig. 7 shows another three embodiments of a rotor having several permanent magnets. Fig. 7a) shows a rotor 710 comprising a shaft 711, a hub 712 mounted on the shaft 711 and rotating with the shaft 711, and two pairs of permanent magnets 713 mounted to an outer surface of the hub 712 equidistantly along a circumference of the hub 712 and each having a north pole N and a south pole S. Fig. 7b) shows a rotor 720 comprising a shaft 721, a hub 722 mounted on the shaft 721 and rotating with the shaft 721, and three pairs of permanent magnets 723 embedded in a bulk material of the hub 722 equidistantly along a circumference of the hub 722 and each having a north pole N and a south pole S. Fig. 7c) shows a rotor 730 comprising a shaft 731, a hub 732 mounted on the shaft 731 and rotating with the shaft 731, and four pairs of permanent magnets 733 inserted into respective holders, e.g. bores, provided in the hub 732 equidistantly along a circumference of the hub 732 and each having a north pole N and a south pole S.

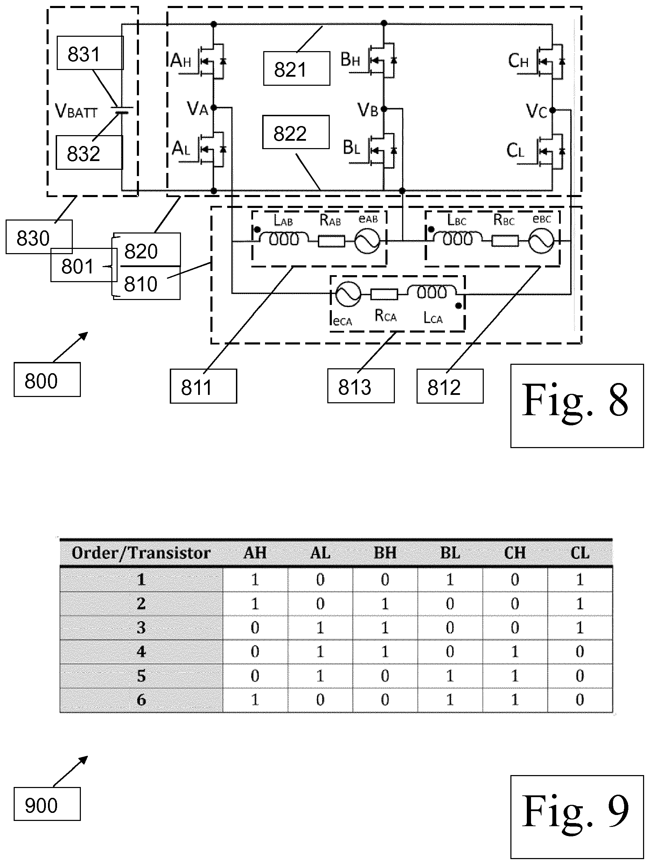

Fig. 8 shows a wiring diagram 800 of an electric motor 801 having a stator 810 and a motor control circuit 820 supplied with electrical energy by an electrical battery 830. The electrical battery 830 comprises a high-connection contact 831 and a low-connection contact 832 and provides a battery voltage V_{BATT} between the high-connection contact 831 and the low-connection contact 832, e.g. 12 Volts or 22 Volts or 48 Volts. The motor control circuit 820 comprises a high connection line 821 electrically connected to the high-connection contact 831, and a low connection line 822 electrically connected to the low-connection contact 832, such that the battery voltage V_{BATT} is provided between the high connection line and the low connection line. The motor control circuit 820 further comprises three high switches A_{H}, B_{H}, C_{H}, three low switches A_{L}, B_{L}, C_{L}, and three intermediate contacts V_{A}, V_{B}, V_{C}. Each of the intermediate contacts V_{A}, V_{B}, V_{C} is electrically connected to the high connection line 821 via one of the high switches A_{H}, B_{H}, C_{H}, respectively, and to the low connection line 822 via one of the low switches A_{L}, B_{L}, C_{L}, respectively. The high switches A_{H}, B_{H}, C_{H} and the low switches A_{L}, B_{L}, C_{L} are formed as field-effect transistors, e.g. MOSFET's.

The stator 810 comprises three magnet coils 811, 812, 813. A first magnet coil 811 has a first end electrically connected to the intermediate contact V_{A}, and a second end electrically connected to the intermediate contact V_{B}. The first magnet coil 811 thus interconnects the intermediate contacts V_{A} and V_{B} to each other. A second magnet coil 812 has a first end electrically connected to the intermediate contact V_{B}, and a second end electrically connected to the intermediate contact V_{C}. The second magnet coil 812 thus interconnects the intermediate contacts V_{B} and V_{C} to each other. A third magnet coil 813 has a first end electrically connected to the intermediate contact V_{C}, and a second end electrically connected to the intermediate contact V_{A}. The third magnet coil 813 thus interconnects the intermediate contacts Vc and V_{A} to each other. Each of the magnet coils 811, 812, 813 has an intrinsic inductance L_{AB}, L_{BC}, L_{CA}, respectively, a resistance R_{AB}, R_{BC}, R_{CA}, respectively, and a back-electromotive force represented as an alternating voltage source e_{AB}, e_{BC}, e_{CA}, respectively.

In order to control the electric motor 801, the high switches A_{H}, B_{H}, C_{H}, and the low switches A_{L}, B_{L}, C_{L} are actuated according to a commutation scheme as described below with reference to Fig. 9.

Fig. 9 shows a commutation table 900 of a method of controlling the electric motor 820. During a first commutation phase 1, the high switch A_{H} and the low switches B_{L} and C_{L} are closed, or switched to "on" ("1"), thereby electrically connecting the intermediate contact V_{A} to the high connection line 821, and the intermediate contacts V_{B} and V_{C} to the low connection line 822, respectively. The remaining high and low switches, i.e. A_{L}, B_{H} and C_{H}, are open, or switched to "off" ("0"). Accordingly, the first magnet coil 811 is energized to accelerate the permanent magnet and hence drives rotation of the rotor 810. At the same time, the second magnet coil 812 is short-circuited which prevents the magnetic field from inducing in the second magnet coil 812 a secondary electric current possibly detrimental to the above acceleration of the permanent magnet.

At the end of first commutation phase 1, the low switch B_{L} is switched to "off" ("0"), thereby electrically disconnecting the intermediate contact V_{B} from the low connection line 822, and high switch B_{H} is switched to "on" ("1"), thereby electrically connecting the intermediate contact V_{B} to the high connection line 821. The remaining high and low switches, i.e. A_{H}, A_{L}, C_{H} and C_{L}, remain open or closed, respectively. Accordingly, in a second commutation phase 2 immediately following the first commutation phase 1, the third magnet coil 813 is energized to accelerate the permanent magnet and, at the same time, the first magnet coil 811 is short-circuited immediately following the first commutation phase 1. In order to prevent short-circuiting the high connection line 821 with the low connection line 822 during switching from the first commutation phase 1 to the second commutation phase 2 via the intermediate contact V_{B}, a dead-time interval is provided to elapse after the low switch B_{L} is switched to "off" ("0") and before the high switch B_{H} is switched to "on" ("1"). During the dead-time interval, none of the switches B_{L}, B_{H} is closed. The dead-time interval is provided by a software-implemented or hardware-implemented dead-time interval.

A mechanical power and/or torque that the electric motor 801 generates depends on the product between the phase currents and the back-electromotive force (BEMF) generated. The way in which the values of those two functions interact determines the magnitude of the generated energy. For instance, matching phase current and BEMF maximum values would create a high-power peak and contribute to the average mechanical power. Having high ripple in the power is not convenient because the torque also would oscillate, therefore, one must avoid having high currents when the BEMF is low (and vice versa), that is, making the two signals coincide as much as possible. Another aspect is avoiding non-coincident polarities of the two signals, because that would result in negative power, that is, in a torque that opposes to the motor sense of rotation, instead of pushing it forward.

The method described above offers a speed, torque and efficiency increase. On the other hand, the torque characteristic is more uniform and therefore the energy transfer to the rotor results in a smoother rotation of the motor.

The foregoing description of exemplary embodiments of the invention have been presented for purposes of illustration and of description. It is not intended to be exhaustive or to limit the invention to the precise form disclosed, and modifications and variations are possible in light of the above teachings or may be acquired from practice of the invention. The functionality described may be distributed among modules that differ in number and distribution of functionality from those described herein. Additionally, the order of execution of the functions may be changed depending on the embodiment. The embodiments were chosen and described in order to explain the principles of the invention and as practical applications of the invention to enable one skilled in the art to utilize the invention in various embodiments and with various modifications as suited to the particular use contemplated. It is intended that the scope of the invention be defined by the claims appended hereto and their equivalents.

## Claims

1. A method of controlling a BLDC electric motor having a stator and a rotor, the stator having a plurality of magnet coils, the rotor having a permanent magnet driven by the plurality of magnet coils, comprising
a) supplying a voltage to a first of the plurality of magnet coils, and
b) short-circuiting a second of the plurality of magnet coils during step a).

2. A method according to claim 1, comprising short-circuiting the first of the plurality of magnet coils following step a).

3. A method according to claim 2, comprising short-circuiting the first of the plurality of magnet coils immediately following step a).

4. A method of controlling a BLDC electric motor having a stator and a rotor, the stator having a plurality of magnet coils, the rotor having a permanent magnet driven by the plurality of magnet coils, wherein the electric motor comprises a motor control circuit having a high connection line, a low connection line, a plurality of high switches, a plurality of low switches, and a plurality of intermediate contacts each one connected to the high connection line via one of the plurality of high switches and connected to the low connection line via one of the plurality of low switches, wherein each one of the plurality of magnet coils has a first end electrically connected to a first one of the plurality of intermediate contacts and a second end electrically connected to a second one of the plurality of intermediate contacts, the each one of the plurality of magnet coils thereby electrically interconnecting the first one of the plurality of intermediate contacts and the second one of the plurality of intermediate contacts, comprising
- providing a voltage between the high connection line and the low connection line
- closing a first one of the plurality of high switches, thereby electrically connecting the first one of the plurality of intermediate contacts to the high connection line during a first commutation phase,
- closing a second one of the plurality of low switches, thereby electrically connecting the second one of the plurality of intermediate contacts to the low connection line during the first commutation phase, and
- closing a third one of the plurality of low switches, thereby electrically connecting a third one of the plurality of intermediate contacts to the low connection line during the first commutation phase.

5. A method according to claim 4, further comprising
- opening the second one of the plurality of low switches, thereby electrically disconnecting the second one of the plurality of intermediate contacts from the low connection line during a second commutation phase following the first commutation phase, and
- closing a second one of the plurality of high switches, thereby electrically connecting the second one of the plurality of intermediate contacts to the high connection line during the second commutation phase.

6. A method according to claim 5, wherein the second commutation phase is immediately following the first commutation phase.

7. A method according to any of claims 5 and 6, wherein a dead-time interval is elapsing after the second one of the plurality of low switches is opened and before the second one of the plurality of high switches is closed.

8. A method according to any of the preceding claims, wherein the plurality of magnet coils consists of three magnet coils.

9. A method according to any of the preceding claims, wherein the plurality of high switches consists of three high switches.

10. A method according to any of the preceding claims, wherein the plurality of low switches consists of three low switches.

11. A method according to any of the preceding claims, wherein the plurality of intermediate contacts consists of three intermediate contacts.

12. A method according to any of the preceding claims, wherein each of the plurality of high switches comprises a field-effect transistor.

13. A method according to any of the preceding claims, wherein each of the plurality of low switches comprises a field-effect transistor.

14. A method of operating a driving tool having a driving piston and an actuating device for actuating the driving piston such that the driving piston drives a fastening element into a substrate, the actuating device comprising a BLDC motor, the method comprising a method of controlling the BLDC motor according to any of the preceding claims.
